# EUROPÄISCHE PATENTANMELDUNG

(11) **EP 1 087 176 A2**
(43) Veröffentlichungstag der Anmeldung: **28.03.2001**
(21) Anmeldenummer: 00119884.5
(22) Anmeldetag: 13.09.2000
(51) Int. Cl.: F21V 21/28, F16M 11/04

(54) **Deckengestützte Aufhängung und deren Verwendung**

(30) Priorität: 21.09.1999 DE 19945081
(71) Anmelder: Heraeus Med GmbH, D-63450 Hanau (DE)
(72) Erfinder: Kolloch, Ullrich, 51061 Köln (DE); Gampe, Uwe, 65439 Flörsheim (DE); Leontidis, Achilleas, 63743 Aschaffenburg (DE)
(74) Vertreter: Kühn, Hans-Christian

(57) **Zusammenfassung**

Eine deckengestützte Aufhängung für ein Gerät, insbesondere für Operationsleuchten (18), weist einen am Drehlager (7) einer Deckenhalterung (2) um eine vertikale Achse (3) drehbar angeordneten Schwenkarm (9) als Ausleger auf. Dieser besteht aus zwei Teilarmen (9',9''), die durch ein um eine vertikale Achse (11) drehbares Zwischengelenk (10) miteinander verbunden sind, wobei beide Teilarme (9',9'') des Schwenkarms (9) in gleicher Höhe angeordnet und in einer horizontalen Ebene verschwenkbar angeordnet sind. Das Zwischengelenk (10) ist durch interne Anschläge nur in einem begrenzten Winkelbereich bis zu 110° schwenkbar; der dem Drehgelenk (7) abgewandte Teilarm (9'') ist an seinem äußeren Ende mit einem ebenfalls um eine vertikale Achse drehbaren Gelenk, an dem ein um 360° schwenkbarer Tragarm (13) für die Aufhängung befestigt ist, versehen.

Durch das Zwischengelenk (10) soll auch bei einer geradlinigen Stellung von dem Schwenkarm (9) und Tragarm (Federarm) (13) der Leuchtenaufhängung eine hohe Beweglichkeit des aufzuhängenden Gehäuses (18) bei radial wirkender Verstellkraft erzielt werden.

## Beschreibung

Die Erfindung betrifft einen deckengestützte Aufhängung für ein Gerät mit einem am Drehgelenk einer Deckenhalterung um eine vertikale Achse drehbar angeordneten Schwenkarm als Ausleger, der aus zwei Teilarmen besteht, die durch ein um eine vertikale Achse drehbares Zwischengelenk miteinander verbunden sind, wobei das Zwischengelenk durch interne Anschläge nur in einem begrenzten Winkelbereich schwenkbar ist und wobei der dem Drehgelenk abgewandte Teilarm an seinem äußeren Ende mit einem ebenfalls um eine vertikale Achse drehbaren Gelenk, an dem ein um 360° schwenkbarer Tragarm befestigt ist, versehen ist.

Aus der US PS 3 010 013 ist eine deckengestützte Aufhängung für eine Operationsleuchte bekannt, bei der ein Ausleger einen ersten Arm mit zwei Enden aufweist, die in unterschiedlichen Höhen positioniert sind, wobei ein Ende mit einem um eine erste vertikale Achse verschwenkbaren Drehgelenk einer Deckenhalterung verbunden ist, während an seinem tiefergelegenen Ende ein Zwischengelenk vorgesehen ist, das um eine zweite vertikale Achse drehbar ist und über das Zwischengelenk mit einem Ende eines zweiten Armes verbunden ist; der ebenfalls schräg verlaufene zweite Arm weist an seinem unteren Ende ein unterhalb des Zwischengelenks angeordnetes Gelenk auf, welches um eine dritte vertikale Achse drehbar ist. Aufgrund der unterschiedlichen Höhen aller drei Gelenke, ist es möglich, auch bei einer Geradeausstellung zwischen Leuchtengehäuse und Deckenbefestigungspunkt eine Verstellung der Leuchte in radialer Richtung zu erzielen, da das Zwischengelenk bei radialer Belastung - insbesondere wenn sich das Operationsleuchtengehäuse in der Nähe des Deckendrehgelenks befindet ― zu einem Einknicken führen wird, so dass eine Verstellung der Lampenposition ohne Probleme möglich ist. Auch wenn die volle Verschwenkbarkeit aufgrund der unterschiedlichen Höhe aller drei Gelenke gegeben ist, geht durch die Höhenstaffelung der drei Gelenke ein verhältnismäßig großer Anteil des oberen Raumes im Operationssaal für die Verstellbarkeit der Operationsleuchte verloren, so dass unter Umständen nur eine sehr eingeschränkte Höheneinstellung der Operationsleuchte möglich ist.

Weiterhin beschreibt das Gebrauchsmuster DE 297 23 699 U1 eine Vorrichtung zum Stützen eines elektrischen Geräts ― wie beispielsweise eines Fernsehgeräts ― die einen Stützarm aufweist, der an einem ersten Ende mit einer Wand oder einer Decke derart verbunden ist, dass er eine Schwenkbewegung um eine Schwenkachse ausführen kann, und der an einem zweiten, von dem ersten Ende entfernten Ende mit einer Stützplattform für das elektrische Gerät versehen ist; die Vorrichtung weist darüber hinaus eine Abdeckung auf, die lösbar an dem Stützarm angebracht werden kann, wobei sich zwischen dem Stützarm und der Abdeckung ein Kabeldurchführungsraum erstreckt; die Vorrichtung ist mit wenigstens zwei Abdeckungen versehen, die jeweils einen Flansch aufweisen, wobei die Flansche von verschiedenen Seiten der Schwenkachse um die Schwenkachse greifen und wobei sich zwischen den Flanschen 7und der Schwenkachse ein Kabeldurchführungsraum erstreckt.

Somit ist auf einfache Weise das Kabel im Bereich der Schwenkachse gegen eine äußere Sicht geschützt.

Ausgehend von einer Aufhängung, wie sie aus der US 3 010 013 bekannt ist, stellt sich die Erfindung die Aufgabe, die Beweglichkeit eines Geräte-Gehäuses oder Gegenstandes so zu verbessern, dass bei einer geradlinigen Stellung von Ausleger bzw. Schwenkarm und Trägerarm der Leuchtenaufhängung eine sogenannte Totpunktstellung vermieden wird und gleichzeitig eine ausreichende Höhenverstellbarkeit der Leuchte zu gewährleisten ist.

Die Aufgabe wird dadurch gelöst, dass beide Teil-Arme des Schwenkarms in gleicher Höhe angeordnet und in einer horizontalen Ebene in einem Winkelbereich von 0 bis ± 110° gegenseitig verschwenkbar angeordnet sind, wobei sowohl das Drehgelenk des Schwenkarms als auch das Zwischengelenk in einer Ebene liegen.

Als vorteilhaft erweist es sich, dass insbesondere, wenn sich eine Operationsleuchte bzw. ein angehängter Gegenstand in der Nähe der Drehachse des Drehlagers befindet, eine hohe Variabilität des Auslegers durch das Zwischengelenk entsteht und somit für die Bewegung des Gegenstandes zusätzliche Freiheitsgrade gegeben sind.

Vorteilhafterweise wird durch das Zwischengelenk die Problematik von Totpunktstellungen entschärft, da fast immer wenigstens ein Gelenk leicht gebeugt ist, so dass bei dem Versuch eine angehängte Operationsleuchte zu bewegen, praktisch immer eine ausreichende Bewegungsmöglichkeit der Aufhängung gegeben ist.

In einer vorteilhaften Ausgestaltung der deckengestützten Aufhängung ist zur Übertragung von elektrischer Energie sowie von Signalen im Zwischengelenk eine flexible Leitung vorgesehen. Die deckengestützte Aufhängung wird in der Praxis vorzugsweise zur Halterung von Operationsleuchten eingesetzt.

Die Verwendung der Erfindung ist auf eine Halterung für Operationsleuchten gerichtet.

Dabei erweist es sich als vorteilhaft, dass der Ausleger durch das Zwischengelenk in seiner Länge quasi variabel ist und daher für Bewegungen des angehängten Gegenstandes zusätzliche Freiheitsgrade bietet; dies ist insbesondere wichtig, falls sich der angehängte Gegenstand ― beispielsweise die Operationsleuchte ― in der Nähe der vertikalen Achse des Drehlagers der Deckenhalterung befindet, so dass sich nur eine schwache Hebelwirkung erzielen lässt.

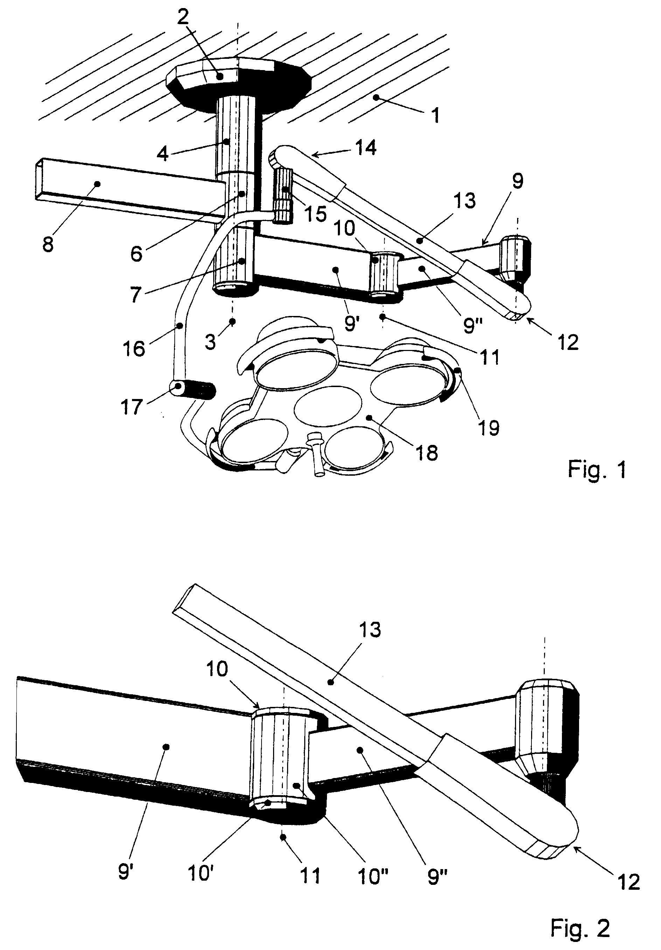

Im folgenden ist der Gegenstand der Erfindung anhand der Figuren 1 und 2 näher erläutert. Figur 1 zeigt schematisch eine Deckenaufhängung für eine erfindungsgemäße Aufhängung, wobei jedoch nur ein Schwenkarm als Ausleger komplett dargestellt ist, während der andere schematisch angedeutet ist.

Figur 2 zeigt ausschnittsweise das Zwischengelenk des Schwenkarms aus Figur 1 zusammen mit dem Federarm zur Aufhängung einer Operationsleuchte.

Gemäß Figur 1 besteht die erfindungsgemäße Aufhängung für eine Operationsleuchte aus einer an der symbolisch dargestellten Decke 1 befestigten Deckenhalterung 2, aus der in vertikaler Richtung entlang Achse 3 ein Flanschrohr 4 ragt. Das Flanschrohr 4 weist zwei Drehlager 6 und 7 auf, deren hülsenförmige Gleitkörper jeweils um 360° ohne irgendeinen Anschlag drehbar gelagert sind. Die Gleitkörper der Drehlager 6, 7 sind jeweils mit einem Ausleger als Schwenkarm 8, 9 verbunden, von denen Schwenkarm 8 nur teilweise (mit Bruchstelle) dargestellt ist, während Schwenkarm 9 mit seinen beiden Teilarmen 9', 9'' erkennbar ist, die über ein Zwischengelenk 10 in einer gemeinsamen horizontalen Ebene verschwenkbar miteinander verbunden sind. Das Gehäuse 10' des Zwischengelenks 10 gemäß Figur 2 ist mit dem ersten Teilarm 9' starr verbunden, wobei innerhalb des Zwischengelenks 10 ein um die vertikale Achse 11 drehbarer Gelenkkopf 10'' erkennbar ist, welcher an seiner zylinderförmigen Peripherie mit dem zweiten Teilarm 9'' mechanisch fest verbunden ist. Dies bedeutet, dass bei Bewegungen des äußeren Endes von Teilarm 9'' um Drehlager 7 oder um Zwischengelenk 10 stets eine Schwenkbewegung in eine horizontaler Ebene ohne irgendwelche Kippbewegungen stattfindet. Am äußeren Ende des zweiten Teilarms 9'' ist eine Gelenkverbindung 12 mit einem angeschlossenem Federarm 13 vorgesehen, dessen äußeres Ende wiederum mit Gelenkverbindung 14 verbunden ist, an der ein Drehgelenk 15 für einen angeschlossenen Lampenbügel 16 befestigt ist. Am Ende des Lampenbügels 16 befindet sich ein Lager 17, an dem die Operationsleuchte 18 drehbar gelagert ist, um einen optimale Einstrahlwinkel zu erhalten. Die 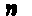 Kardanische" Verstellung der Operationsleuchte 18 erfolgt über seitlich angebrachte Griffe 19. Anhang Figur 1 ist erkennbar, dass Zwischengelenk 10 insbesondere dann ausgenutzt wird, wenn sich die Operationsleuchte 18 in der Nähe der Flanschrohr-Achse 3 befindet und der Hebelarm zwischen Operationsleuchte und ihrer Aufhängung in Bezug auf Achse 3 nahezu null ist. In diesem Fall übernimmt Zwischengelenk 10 eine Art Knickfunktion und ermöglicht so auf einfache Weise eine leichte Verstellbarkeit, wie sie insbesondere während eines operativen Eingriffs erforderlich ist.

Die bereits zuvor erläuterte Figur 2 entspricht im Wesentlichen einem Ausschnitt aus Figur 1, wobei nunmehr jedoch Gelenkgehäuse und Gelenkkopf besser erkennbar sind.

Gemäß der ausschnittsweisen Darstellung von Figur 2 ist erkennbar, dass Zwischengelenk 10 aus einem Gelenkgehäuse 10' und einem darin entlang der Achse 11 drehbar gelagerten Gelenkkopf 10'' besteht.

Die Stromübertragung im Inneren des Zwischengelenks 10 erfolgt durch ein flexibles Kabel; es ist jedoch auch möglich, zylinderförmige Schleifringe im Gelenkgehäuse 10' einzusetzen, welche von Schleifringaufnehmern im Drehbereich des Gelenkkopfes 10'' abgetastet werden und elektrische Energie sowie ggf. Signale übertragen.

## Patentansprüche

1. Deckengestützte Aufhängung für ein Gerät mit einem am Drehlager einer Deckenhalterung um eine vertikale Achse drehbar angeordneten Schwenkarm als Ausleger, der aus zwei Teilarmen besteht, die durch ein um eine vertikale Achse drehbares Zwischengelenk miteinander verbunden sind, wobei das Zwischengelenk durch interne Anschläge nur in einem begrenzten Winkelbereich schwenkbar ist und wobei der dem Drehgelenk abgewandte Teilarm an seinem äußeren Ende mit einem ebenfalls um eine vertikale Achse drehbaren Gelenk, an dem ein um 360° schwenkbarer Tragarm für die Aufhängung befestigt ist, versehen ist,
dadurch gekennzeichnet, dass beide Teilarme (9', 9'') des Schwenkarms (9) in gleicher Höhe angeordnet und in einer horizontalen Ebene in einem Winkelbereich von 0 bis ± 110° gegenseitig verschwenkbar angeordnet sind, wobei sowohl das Drehgelenk (7) des Schwenkarms (9) als auch das Zwischengelenk (10) in einer Ebene liegen.

2. Deckengestützte Aufhängung nach Anspruch 1, dadurch gekennzeichnet, dass zur Übertragung von elektrischer Energie sowie Signalen im Zwischengelenk (10) eine flexible Leitung vorgesehen ist.

3. Verwendung einer deckengestützten Aufhängung nach einem der Ansprüche 1 oder 2 für eine Operationsleuchte.
